# EUROPEAN PATENT SPECIFICATION

(11) **EP 2 230 098 B1**
(45) Date of publication and mention of the grant of the patent: **02.05.2012**
(21) Application number: 08855108.0
(22) Date of filing: 26.09.2008
(51) Int. Cl.: B60C 9/18, B60C 9/20

(54) **PNEUMATIC RADIAL TIRE**
RADIALLUFTREIFEN
PNEU À CARCASSE RADIALE

(30) Priority: 27.11.2007 JP 2007306158
(43) Date of publication of application: 22.09.2010
(73) Proprietor: Sumitomo Rubber Industries, Ltd., Kobe-shi, Hyogo 651-0072 (JP)
(72) Inventor: YAMAZAKI, Kazumi, Kobe-shi Hyogo 651-0072 (JP)
(74) Representative: Manitz, Finsterwald & Partner GbR
(86) International application number: PCT/JP2008/067426
(87) International publication number: WO 2009/069374

(56) References cited:
- JP-A- 5 294 108
- JP-A- 11 222 008
- JP-A- 60 131 303

## Description

### TECHNICAL FIELD

The present invention relates to a pneumatic radial tire using steel cords as a carcass cord and as a belt cord, which is suitable as a heavy duty radial tire and in which delamination damage between a carcass and a belt layer in final stage of wear caused by thermal degradation (oxidation degradation) is suppressed with securing the steering stability.

### BACKGROUND ART

In heavy duty pneumatic radial tires for trucks, buses and the like is widely adopted an all-steel radial structure using a steel cord as a cord for a carcass which constitutes a framework of a tire, and a cord for a belt layer disposed radially outward of the carcass and inside a tread, respectively (see for example Patent Literature 1).
Patent Literature 1: JP-A-11-222008

### DISCLOSURE OF THE INVENTION

### Problem to be Solved by the Invention

Tires with this structure are excellent in both tensile strength of the cord and durability of the cord and have enough leeway in tire strength and, therefore, they have been used under a condition of high inner pressure in order to increase the loading capacity.

On the other hand, wear life of tires has been increased by progress in development of tread rubber. However, there is reported a new problem that in case of tires with the above-mentioned structure, as a result of increase in wear life, sudden delamination may occur between a carcass and a belt layer in a final stage of wear depending on use and running conditions of tires, thus resulting in damage of the tires.

Thus, in order to find the cause of this tire damage, the present inventor has made a study and found the following things. Tires with the all-steel radial structure are frequently used under a condition of increased inner pressure in order to enhance the loading capacity and, in that time, the filled air tends to easily penetrate into the inside of tire. On the other hand, with increase of expressway and development of high performance vehicles, occasion of high speed running increases on such tires. The temperature of the tread portion rises when running at a high speed. Thus, it is considered that owing to an interaction between oxygen in the air penetrating into the inside of tire and the temperature rise at the tread portion owing to high speed running, thermal degradation (oxidation degradation) of rubber is accelerated between the carcass and the belt layer to lower the physical properties of the rubber and, as a result, an impact from a road or the like would trigger sudden delamination between the carcass and the belt layer prior to reaching the wear life.

Thus, it has been found that for preventing such a delamination from occurring, it is effective to interpose a reinforcing rubber layer having a high rubber elasticity between the carcass and the belt layer, thereby reducing the impact force from a road, while retaining the rubber physical properties to some extent against thermal degradation (oxidation degradation).

Accordingly, the present invention is based on interposing a reinforcing rubber layer having a predetermined 100% modulus between the carcass and the belt layer, while controlling a cord flexural rigidity G of a cord used in a working belt ply and a ply flexural rigidity of the working belt ply within predetermined ranges. It is an object of the present invention to provide a pneumatic radial tire capable of suppressing sudden delamination damage occurring between the carcass and the belt layer in final stage of wear by thermal degradation (oxidation degradation) with securing the steering stability.

### Means to Solve the Invention

The present invention provides a pneumatic radial tire comprising a carcass comprising a single carcass ply which extends from a tread portion to bead cores in bead portions through sidewall portions and in which carcass cords made of a steel are arranged, and a belt layer comprising a plurality of belt plies which are disposed inside the tread portion and radially outward of the carcass and in which cords made of a steel are arranged, the pneumatic radial tire being characterized in that:
said plurality of belt plies include a pair of working belt plies radially superposed on each other and comprising one working belt ply tilting in one direction with respect to a tire equator and the other working belt ply tilting in the other direction with respect to the tire equator,
said one and the other working belt plies are such that a flexural rigidity G of the belt cord per a single cord falls within the range of 110 to 340 gf·cm², and a belt ply flexural rigidity defined by the product G×N of the flexural rigidity G and the number N of cords per cm of the working belt ply falls within the range of 2,000 to 3,500 gf·cm, and
a reinforcing rubber layer having a 100% modulus which is not less than 2 MPa and is not more than a 100% modulus of a topping rubber of the carcass ply and a 100% modulus of a topping rubber of the belt plies and having a thickness T of 0.3 to 3.5 mm is disposed between the carcass and the belt layer.

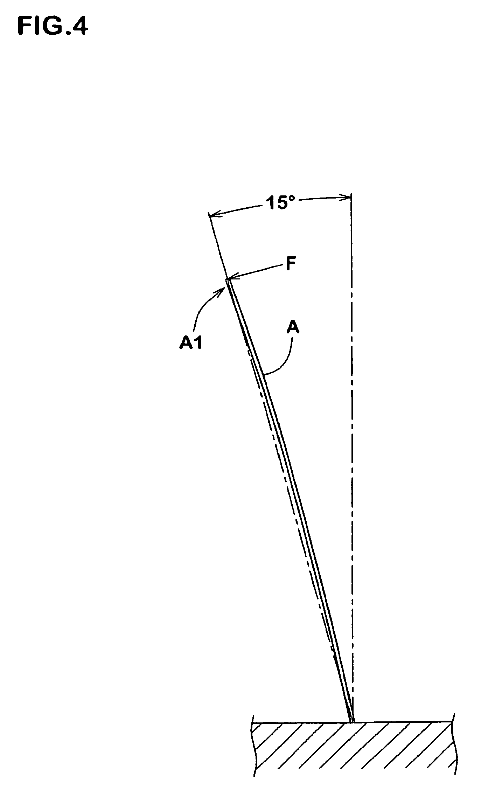

The "flexural rigidity G of cord" is obtained by preparing a test specimen by melt-cutting a steel cord to a length of 70 mm so as not to untwist the cord, and subjecting the specimen to measurement using for example a Stiffness Tester (Model 150-D) made by Taber Industries in U.S.A. or the like. Specifically, as shown schematically in Fig. 4, it is obtained by fixing one end of a specimen A, applying a force F to the other end A1 of the specimen A extending with a length of 50 mm from the fixed end, and measuring a drag (flexural rigidity) when the specimen A is bent at an angle of 15° at the other end A1. The "number N of cords" denotes the number of cords arranged per 1 inch width of a ply counted in a direction perpendicular to the length direction of the cord. Further, the "100% modulus" denotes a value measured according to a testing method described in JIS K 6251.

### Effects of the Invention

As mentioned above, since a reinforcing rubber layer having a predetermined 100% modulus is interposed between the carcass and the belt layer, the rubber physical properties can be retained to some extent even if thermal degradation (oxidation degradation) of rubber caused by high speed running and high inner pressure is accelerated. Also, since the flexural rigidity of the cord in the working belt ply and the flexural rigidity of the belt ply are controlled within predetermined ranges, an impact force from a road can be reduced. Further, by a synergistic effect between them, sudden delamination between the carcass and the belt layer in final stage of wear can be effectively suppressed, so tires can be prevented from damaging.

### BRIEF DESCRIPTION OF THE DRAWINGS

Fig. 1 is a cross sectional view of a pneumatic radial tire showing an embodiment of the present invention;
Fig. 2 is a conceptual view showing a cord arrangement of a belt layer;
Fig. 3 is a cross sectional view showing a tread portion in an enlarged form; and
Fig. 4 is a view illustrating a method of measuring the flexural rigidity of a cord.

### Explanation of Symbols

- 2.: Tread portion
- 3.: Sidewall portion
- 4.: Bead portion
- 5.: Bead core
- 6.: Carcass
- 6A.: Carcass ply
- 6a.: Ply main body
- 7.: Belt layer
- 7A-7D.: Belt plies
- 10.: Working belt ply
- 11.: Reinforcing rubber layer

### BEST MODE FOR CARRYING OUT THE INVENTION

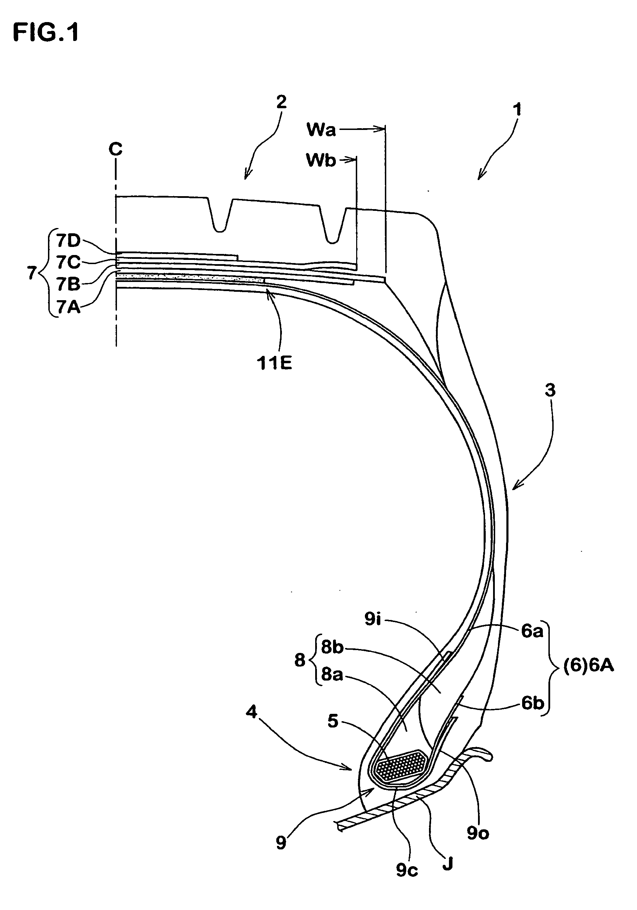

An embodiment of the present invention will be explained with reference to the accompanying drawings. Fig. 1 is a meridian cross section view showing illustratively a case where the pneumatic radial tire according to the present invention is a heavy duty tire for trucks and buses.

As shown in Fig. 1, a heavy duty radial tire 1 includes a carcass 6 that extends from a tread portion 2 to bead cores 5 in bead portions 4 through sidewall portions 3, and a belt layer 7 that is disposed inside the tread portion 2 and radially outward of the carcass 6.

The carcass 6 is formed of a single carcass ply 6A in which carcass cords made of a steel (steel cords) are disposed at an angle of 80 to 90° with respect to the a circumferential direction of tire and are covered with a topping rubber. This carcass ply 6A is composed of a toroidal ply main portion 6a that extends between the bead cores 5, 5, and ply turnup portions 6b that are continuous with the both ends of the ply main portion 6a and are turned up around the bead cores 5 from the axially inside to the axially outside of the tire. Further, between the ply main portion 6a and the ply turnup portions 6b are disposed bead apex rubbers 8 for bead reinforcement that extend radially outwardly from the bead cores 5 in a tapered manner.

The bead apex rubber 8 is formed of a radially inner lower apex portion 8a made of a hard rubber having, for example, a rubber hardness (Durometer A hardness) of 80 to 95, and a radially outer upper apex portion 8b made of a soft rubber which is softer than the lower apex portion. The upper apex portion 8b in this embodiment has a rubber hardness of, for example, 50 to 65, whereby shearing stress acting on the ply turnup portions 6b at the time of bead deformation is reduced to prevent separation of the ply turnup portions 6b.

For the purpose of reinforcing the bead portion 4, a bead reinforcing layer 9 is disposed in the bead portion 4. The bead reinforcing layer 9 comprises a cord ply in which reinforcing cords made of a steel are arranged at an angle of, for example, 10 to 60° with respect to the tire circumferential line. The bead reinforcing layer 9 is formed into such a U-shape in cross section that an inner portion 9i extending along an axially inner surface of the ply main portion 6a and an outer portion 9o extending an axially outer surface of the turnup portion 6b are joined to both ends of a bottom portion 9c passing below the bead core.

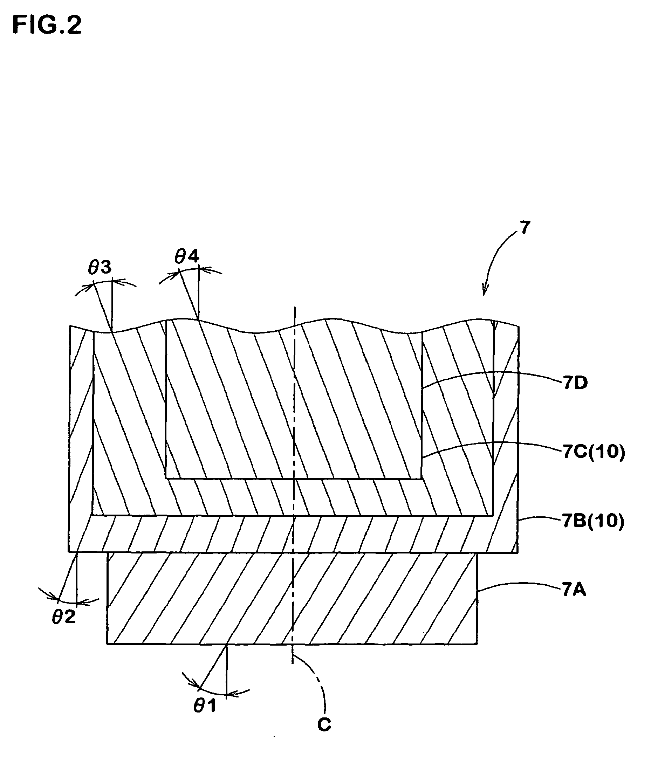

The belt layer 7 comprises a plurality of belt plies using a belt cord made of steel (steel cord). In this embodiment is exemplified a belt layer 7 having a four layer structure in which four belt plies 7A to 7D are stacked one after another. As shown conceptually in Fig. 2, in the first belt ply 7A in this embodiment disposed on the radially innermost side of the belt layer, the belt cords are oriented at an angle θ1 of, for example, 60±10° with respect to the tire circumferential direction and are covered with a topping rubber. In the second to fourth belt plies 7B to 7D disposed subsequently radially outward of the first belt ply, the belt cords are oriented at small angles θ2 to θ4 of, for example, 15 to 30° with respect to the tire circumferential direction and are covered with a topping rubber. In the first and second belt plies 7A and 7B, the belt cords are inclined in one direction (diagonally right up in Fig. 2) with respect to the tire equator C, and in the third and fourth belt plies 7C and 7D, the belt cords are inclined in the other direction (diagonally right down in Fig. 2).

That is to say, in this embodiment, the second and third belt plies 7B and 7C constitute one and the other working belt plies 10 which overlap radially one another and whose belt cords are inclined in one and the other directions. This pair of working belt plies 10 are plies having the highest reinforcing effect among the belt plies 7A to 7D because the belt cords thereof intersect each other and bind each other. Thus, the belt rigidity is enhanced by including such a pair of the working belt plies 10, so the tread portion 2 can be strongly reinforced with a hoop effect. Therefore, it is preferable that a width Wa of one ply (second belt ply 7B in this embodiment) of the pair of the working belt plies 10 is the largest among the belt plies 7A to 7D, and a width Wb of the other ply (third belt ply 7C in this embodiment) of the pair of the working belt plies 10 is smaller than the width Wa by about 5 to about 10 mm, thereby reducing stress concentration at ply edge while maintaining the reinforcing effect high.

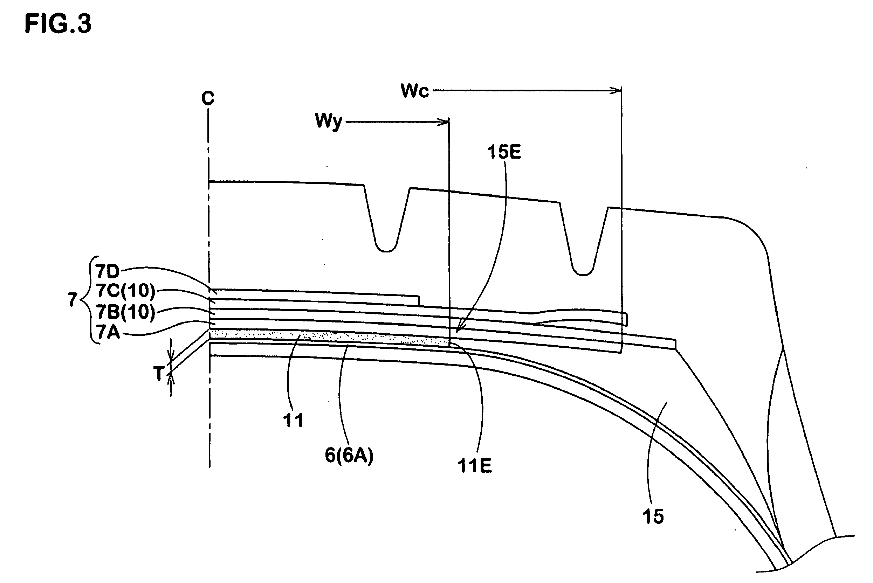

As shown in Fig. 3 in an enlarged form, the heavy duty tire 1 in this embodiment includes, between the carcass 6 and the belt layer 7, a reinforcing rubber layer 11 which is in the form of a sheet having a constant thickness T and has a 100% modulus M1 of not less than 2 MPa. The thickness T of this reinforcing rubber layer 11 is from 0.3 to 3.5 mm, and the upper limit of the 100% modulus M1 is set to a value not more than a 100% modulus M2 of a topping rubber of the carcass ply 6A and a topping rubber of the belt plies 7A to 7C. The reinforcing rubber layer 11 is in contact with both the carcass ply 6A and the first belt ply 7A over the full length of the rubber layer 11. A width Wy between axially outer edges 11E, 11E of the reinforcing rubber layer 11 is set within the range of 50 to 95 % of a width Wc of the first belt ply 7A. The reinforcing rubber layer 11 does not radially overlap a cushion rubber 15 mentioned after, and the axially outer edges 11E of the reinforcing rubber layer 11 terminate so as to come into contact with axially inner edges 15E of the cushion rubbers 15.

Such a reinforcing rubber layer 11 can maintain the rubber elasticity to some extent even in a case where thermal degradation (oxidation degradation) of a rubber is accelerated by an interaction between temperature rise to high temperature at the tread portion 2 owing to high speed running and penetration of air into the inside of a tire inflated to a high inner pressure, since the 100% modulus M1 the reinforcing rubber layer 11 is set to 2 Mpa or more. Thus, the reinforcing rubber layer 11 can exhibit an effect of suppressing generation of delamination between the carcass 6 and the belt layer 7.

If the 100% modulus M1 is less than 2 MPa and the thickness T is less than 0.3 mm, the effect of suppressing the delamination cannot be exhibited. If the 100% modulus is more than the 100% modulus M1 of the topping rubber of the carcass ply 6A and/or the topping rubber of the belt plies 7A to 7D, the topping rubber on the carcass ply side and/or the topping rubber on the belt ply side are subject to a mechanical fatigue and are broken by generation of cracks in the topping rubber layer. Further, if the thickness T is more than 3.5 mm, cornering power is greatly lowered, so the steering stability is lowered. From such points of view, it is preferable that the 100% modulus M1 is not less than 4 MPa, and it is also preferable that the 100% modulus M1 is less than the 100% modulus M2 of the topping rubber. Further, it is preferable that the thickness T is not less than 0.5 mm, and not more than 3.0 mm. Also, if the width Wy of the reinforcing rubber layer 11 is less than 50 % of the width Wc, the delamination suppressing effect of the reinforcing rubber layer 11 cannot be sufficiently exhibited.

In this embodiment, a space between the carcass 6 and the belt layer 7 at both edge portions of the belt layer 7 gradually increases toward an axially outer side of the tire, and a cushion rubber 15 having an approximately triangular cross section is disposed in this space-increasing portion. The cushion rubber 15 has the maximum thickness at a location of the outer edge of the second belt ply 7B, and from the maximum thickness location, it extends axially inwardly and outwardly along the outer surface of the carcass 6 with gradually decreasing its thickness. An axially inner edge 15E of the cushion rubber is in contact with the outer edge 11E of the reinforcing rubber layer 11 and terminates there. The cushion rubber 15 has a 100% modulus M3 lower than the 100% modulus M1 of the reinforcing rubber layer 11, whereby a strain between the belt layer 7 and the carcass 7 is absorbed to prevent loosing between the belt edge and the carcass.

In the working belt plies 10, a flexural rigidity G of the belt cord per a single cord (hereinafter sometimes referred to as "cord flexural rigidity G") is set to not more than 340 gf·cm², and a belt ply flexural rigidity defined by the product G×N of the cord flexural rigidity G and the number N of cords per cm of a working belt ply 10 is set to not more than 3,500 gf·cm.

If the cord flexural rigidity G is more than 340 gf·cm² and the belt ply flexural rigidity is more than 3,500 gf·cm, an impact-relaxing effect becomes insufficient, so it would be difficult to suppress the delamination. On the other hand, if the cord flexural rigidity G is less than 110 gf·cm² and the belt ply flexural rigidity is less than 2,000 gf·cm, the reinforcing effect of the belt layer 7 becomes insufficient to lower the cornering power, so it would be difficult to secure a necessary steering stability. From such points of view, it is preferable that the cord flexural rigidity G is not less than 110 gf·cm² and is not more than 340 gf·cm². Further, it is preferable that the belt ply flexural rigidity is not less than 2,000 gf·cm and is not more than 3,500 gf·cm.

A particularly preferable embodiment of the present invention has been described, but the present invention can be modified into various embodiments and carried out without being limited to only the embodiment shown in the drawings.

### EXAMPLES

Heavy duty radial tires (tire size 315/80R22.5) having a structure shown in Fig. 1 were manufactured based on the specifications shown in Table 1, and the durability of the tires were tested. The results are shown in Table 1. Specifications other than those described in Table 1 are common to all tires.

### (1) Durability

A tire mounted on a rim was filled with oxygen (oxygen concentration 100 %) in place of air up to an inner pressure of 900 kPa, and it was placed in a dry heat oven maintained at 70°C for 4 weeks to accelerate oxidation degradation from the inside of the tire. The tire subjected to oxidation degradation was then subjected to the following running test. The running test was made by filling the tire with normal air up to an inner pressure (900 kPa) at a maximum loading of the standard and running the tire under a loading condition (maximum load of standard × 0.85) on a drum (diameter 1.7 m) with increasing the speed stepwise by 10 km/hour every 6 hours from 80 km/hour. A speed at the time of reaching damage of the tire, a running time up to that speed and a state of breaking were compared. The temperature of the testing room was 35 ± 5°C.

### (2) Cornering power

A tire mounted on a rim was run on a drum (diameter 2.0 m) under conditions of inner pressure (inner pressure at maximum loading of standard), load (maximum load of standard) and speed (4 km/h), and a cornering power at a slip angle of 1° was measured. The results are shown by an index based on a result of Example 1 regarded as 100. The larger the value, the larger the cornering power and the better the steering stability.

**Table 1**

| | Ex. 1 | Ex. 2 | Ex. 3 | Ex. 4 | Com. Ex.1 | Com. Ex. 2 | Com. Ex.3 | Com. Ex.4 | Com. Ex. 5 | Com. Ex. 6 |
|---|---|---|---|---|---|---|---|---|---|---|
| Reinforcing rubber layer | yes | yes | yes | yes | yes | yes | yes | yes | yes | yes |
| Thickness T (mm) | 1.5 | 0.8 | 2.6 | 1.5 | 0.4 | 3.2 | 1.5 | 1.5 | 1.5 | 1.5 |
| 100% Modulus (MPa) | 4.0 | 4.0 | 4.0 | 2.3 | 4.0 | 4.0 | 1.8 | 4.0 | 4.0 | 4.0 |
| Working belt | | | | | | | | | | |
| Belt cord | 1×9× 0.38 | 1×9× 0.38 | 1×9× 0.38 | 1×9× 0.38 | 1×9× 0.38 | 1×9× 0.38 | 1×9× 0.38 | 1×8× 0.42 | 1×8× 0.42 | 1×9× 0.38 |
| Cord flexural rigidity G (gf·cm²) | 256 | 256 | 256 | 256 | 256 | 256 | 256 | 346 | 346 | 256 |
| Number N of cords/cm | 12 | 12 | 12 | 12 | 12 | 12 | 12 | 11 | 10 | 14 |
| Ply flexural rigidity G×N | 3072 | 3072 | 3072 | 3072 | 3072 | 3072 | 3072 | 3806 | 3460 | 3584 |
| Cornering power | 100 | 97 | 93 | 99 | 96 | 87 | 95 | 110 | 106 | 106 |
| Durability | | | | | | | | | | |
| Speed (km/h) | 100 | 100 | 100 | 100 | 90 | 100 | 90 | 90 | 90 | 90 |
| Running time (hour) | 4.5 | 2.2 | 5.0 | 1.5 | 4.7 | 4.8 | 3.6 | 1.0 | 1.3 | 2.1 |
| Breaking state | *1 | *1 | *1 | *1 | *2 | *1 | *2 | *2 | *2 | *2 |

| | | | | | | | | | | |
|---|---|---|---|---|---|---|---|---|---|---|
| *1: Belt edge loosing *2: Sudden delamination damage | | | | | | | | | | |

As shown in Table 1, it is confirmed that the tires of the Examples do not cause such a breaking state as sudden delamination damage owing to thermal degradation (oxidation degradation) and remain only on a stage of belt edge loosing. It is also confirmed that lowering of the cornering powder is suppressed to a minimum, so the steering stability can be secured.

## Claims

1. A pneumatic radial tire comprising a carcass (6) comprising a single carcass ply (6A) which extends from a tread portion (2) to bead cores (5) in bead portions (4) through sidewall portions (3) and in which carcass cords made of a steel are arranged, and a belt layer (7) comprising a plurality of belt plies (7A-7D) which are disposed inside the tread portion (2) and radially outward of the carcass (6) and in which cords made of steel are arranged, wherein
said plurality of belt plies (7A-7D) include a pair of working belt plies (10) radially superposed on each other and comprising one working belt ply tilting in one direction with respect to a tire equator and the other working belt ply tilting in the other direction with respect to the tire equator,
Said pneumatic radical tire being **characterized in that** :
said one and the other working belt plies (10) are such that a flexural rigidity G of the belt cord per a single cord falls within the range of 110 to 340 gf·cm², and a belt ply flexural rigidity defined by the product G×N of the flexural rigidity G and the number N of cords per cm of the working belt ply falls within the range of 2,000 to 3,500 gf·cm, and
a reinforcing rubber layer (11) having a 100% modulus which is not less than 2 MPa and is not more than a 100% modulus of a topping rubber of the carcass ply and a 100% modulus of a topping rubber of the belt plies (7A-7D) and having a thickness T of 0.3 to 3.5 mm is disposed between the carcass (6) and the belt layer (7).

## Patentansprüche

1. Radialluftreifen mit einer Karkasse (6), die eine einzige Karkasslage (6A) umfasst, die sich von einem Laufflächenabschnitt (2) zu Wulstkernen (5) in Wulstabschnitten (4) durch Seitenwandabschnitte (3) erstreckt, und in der Karkasskorde, die aus Stahl hergestellt sind, angeordnet sind, und einer Gürtelschicht (7), die eine Vielzahl von Gürtellagen (7A - 7D) umfasst, die innerhalb des Laufflächenabschnitts (2) und radial außen von der Karkasse (6) angeordnet sind und in denen Korde, die aus Stahl hergestellt sind, angeordnet sind, wobei
die Vielzahl von Gürtellagen (7A - 7D) ein Paar Arbeitsgürtellagen (10) umfasst, die radial übereinander gelegt sind und eine Arbeitsgürtellage, die sich mit Bezug auf einen Reifenäquator in eine Richtung neigt, und eine weitere Arbeitsgürtellage umfassen, die sich mit Bezug auf den Reifenäquator in die andere Richtung neigt,
wobei der Radialluftreifen **dadurch gekennzeichnet ist, dass**:
die eine und die andere Arbeitsgürtellage (10) derart sind, dass eine Biegesteifigkeit G des Gürtelkords pro einem einzelnen Kord in den Bereich von 110 bis 340 gf · cm² fällt, und eine Gürtellagen-Biegesteifigkeit, die durch das Produkt G x N aus der Biegesteifigkeit G und der Zahl N von Korden pro cm definiert ist, der Arbeitsgürtellage in den Bereich von 2000 bis 3500 gf · cm fällt, und
eine Verstärkungsgummischicht (11), die einen 100 %-Modul aufweist, der nicht kleiner als 2 MPa und nicht größer als ein 100 %-Modul eines Gummierungsgummis der Karkasslage und ein 100 %-Modul eines Gummierungsgummis der Gürtellagen (7A - 7D) ist und eine Dicke T von 0,3 bis 3,5 mm aufweist, zwischen der Karkasse (6) und der Gürtelschicht (7) angeordnet ist.

## Revendications

1. Pneumatique à carcasse radiale comprenant une carcasse (6) comprenant une unique nappe de carcasse (6A) qui s'étend depuis une portion formant bande de roulement (2) jusqu'à des âmes de talon (5) dans des portions de talon (4) en traversant des portions formant parois latérales (3) et dans laquelle sont disposés des câblés de carcasse réalisés en acier, et une couche de ceinture (7) comprenant une pluralité de nappes de ceinture (7A-7D) qui sont disposés à l'intérieur de la portion formant bande de roulement (2) et radialement à l'extérieur de la carcasse (6) et dans lesquels sont agencés des câblés réalisés en acier,
dans lequel ladite pluralité de nappes de ceinture (7A-7D) inclut une paire de nappes de ceinture de travail (10) superposées radialement l'une sur l'autre et comprenant une nappe de ceinture de travail basculée dans une direction par rapport à un équateur du pneumatique et l'autre nappe de ceinture de travail étant basculée dans l'autre direction par rapport à l'équateur du pneumatique,
ledit pneumatique à carcasse radiale étant **caractérisé en ce que** :
ladite nappe de ceinture de travail et ladite autre nappe de ceinture de travail (10) sont telles qu'une rigidité en flexion G du câblé de ceinture pour un unique câblé tombe dans la plage de 110 à 340 gf·cm², et qu'une rigidité en flexion de la nappe de ceinture définie par le produit GxN de la rigidité en flexion G et du nombre N de câblés par centimètre des nappes de ceinture de travail tombe dans la plage de 2000 à 3500 gf cm, et
une couche de caoutchouc de renforcement (100) ayant un module à 100 % qui n'est pas inférieur à 2 MPa et qui n'est pas supérieur au module à 100 % d'un caoutchouc d'enrobage de la nappe de carcasse et au module à 100 % d'un caoutchouc d'enrobage des nappes de carcasse (7A-7B) et ayant une épaisseur T de 0,3 à 3,5 mm est disposée entre la carcasse (6) et la couche de ceinture (7).
